# EUROPEAN PATENT APPLICATION

(11) **EP 4 258 240 A1**
(43) Date of publication of application: **11.10.2023**
(21) Application number: 20964311.3
(22) Date of filing: 04.12.2020
(51) Int. Cl.: G08G 1/16

(54) **REDUNDANT SYSTEM**

(71) Applicant: NISSAN MOTOR CO., LTD., Kanagawa 221-0023 (JP)
(72) Inventor: HAYAKAWA, Yasuhisa, Atsugi-shi, Kanagawa 243-0123 (JP); TAKEDA, Fuminori, Atsugi-shi, Kanagawa 243-0123 (JP); AJIRO, Keigo, Atsugi-shi, Kanagawa 243-0123 (JP)
(74) Representative: Grünecker Patent- und Rechtsanwälte PartG mbB
(86) International application number: PCT/JP2020/045205
(87) International publication number: WO 2022/118459

(57) **Abstract**

A redundant system is mounted on a vehicle configured to autonomously travel. The redundant system at least includes a first power supply system (3) and a second power supply system (4) different from the first power supply system (3). The redundant system includes: an operation control main control device (11) that performs a process to cause the vehicle to autonomously travel; and an operation control sub control device (21) used instead of the operation control main control device (11) when abnormality regarding the operation control main control device (11) is detected. The operation control main control device (11) is connected to the first power supply system (3) and is not connected to the second power supply system (4). The operation control sub control device (21) is connected to the second power supply system (4) and is not connected to the first power supply system (3).

## Description

### TECHNICAL FIELD

The present invention relates to a redundant system mounted on a vehicle configured to autonomously travel.

### BACKGROUND ART

Regarding an automobile that includes an automated driving assistance system, there has been known an architecture what is called a "conditional automation" system (for example, Patent Document 1). The architecture described in Patent Document 1 includes a main computer, a backup computer used instead of the main computer in a case where a failure pertaining to the main computer occurs, and a main power supply that feeds power to the main computer and the backup computer. Additionally, the architecture described in Patent Document 1 includes a backup power supply used instead of the main power supply, and the backup power supply is connected to the main computer and the backup computer.
Patent Document 1: JP-T-2018-504309

### DISCLOSURE OF THE INVENTION

### PROBLEMS TO BE SOLVED BY THE INVENTION

In the architecture described in Patent Document 1, each of the main computer and the backup computer is connected to a plurality of the different power supplies referred to as the main power supply and the backup power supply. This causes problems of making a connecting relationship between the computers and the power supplies complicated and an increase in design scale of the system.

A problem to be solved by the present invention is to provide a redundant system that allows a decrease in design scale of the system.

### SOLUTIONS TO THE PROBLEMS

The present invention is a redundant system that solves the problem as follows. The redundant system is mounted on a vehicle configured to autonomously travel. The redundant system at least includes a first power supply system and a second power supply system. The redundant system includes an operation control main control device and an operation control sub control device. The operation control main control device performs a process to cause the vehicle to autonomously travel. The operation control sub control device is used instead of the operation control main control device when abnormality regarding the operation control main control device is detected. The operation control main control device is connected to the first power supply system and is not connected to the second power supply system. The operation control sub control device is connected to the second power supply system and is not connected to the first power supply system.

### EFFECTS OF THE INVENTION

According to the present invention, the operation control main control device is connected to the first power supply system and is not connected to the second power supply system, and the operation control sub control device is connected to the second power supply system and is not connected to the first power supply system. Therefore, a connecting relationship between the control devices and the power supply systems can be simplified, and design scale of the system can be decreased.

### BRIEF DESCRIPTION OF THE DRAWINGS

Fig. 1 is a power supply system diagram of a redundant system according to this embodiment.
Fig. 2 is a block diagram of the redundant system according to this embodiment.
Fig. 3 is an explanatory view illustrating an operation when abnormality does not occur in a main control system.
Fig. 4 is an explanatory view illustrating an operation when abnormality occurs in an operation control main ECU.
Fig. 5 is an explanatory view illustrating an operation when abnormality occurs in a first power supply system.
Fig. 6 is an explanatory view illustrating an operation when abnormality occurs in a sensor.

### DESCRIPTION OF PREFERRED EMBODIMENTS

The following describes embodiments of the present invention based on the drawings. In the following description, expressions "first" and "second" are expressions for the purpose of identification, and are not expressions for the purpose of specifying superiority or inferiority, such as a device with a name including the expression "first" being prioritized over a device with a name including the expression "second" or on the contrary, a device with a name including the expression "second" being prioritized over a device with a name including the expression "first."

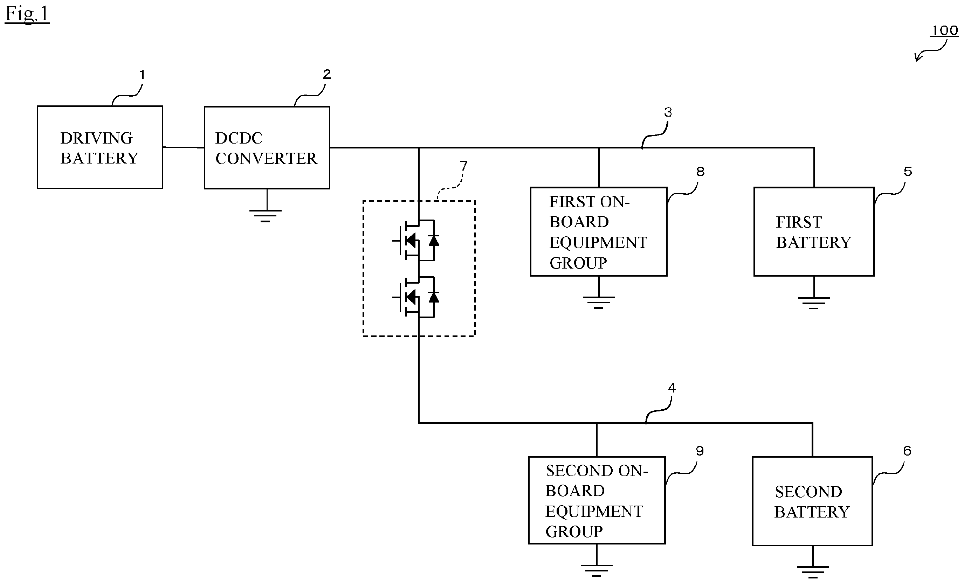

Fig. 1 is a power supply system diagram of a redundant system 100 according to this embodiment mounted on an electric vehicle. In this embodiment, an example in which the redundant system 100 is mounted on the electric vehicle will be described, but the redundant system 100 only needs to be a system mounted on a vehicle, and a driving source of the vehicle is not specifically limited. For example, the redundant system 100 may be mounted on a hybrid vehicle and a gasoline automobile.

The electric vehicle according to this embodiment has an autonomous traveling control function and can travel in an automated driving mode according to a driving assistance level. The driving assistance level is a level indicating a degree of intervention when a driving assistance device assists driving of a vehicle by the autonomous traveling control function. The higher the driving assistance level becomes, the lower a level of contribution of a driver to driving of the vehicle. Specifically, the driving assistance level can be set using, for example, definition based on SAE J3016 of Society of Automotive Engineers (SAE). In this embodiment, the driving assistance level achieved by the driving assistance device will be described as a driving assistance level 3. While the system performs all driving tasks in the driving assistance level 3, when the system performs a request, a driver needs to recover control of driving and prepare for manual driving. Additionally, in the driving assistance level 3, a redundant function that continues autonomous traveling by the remaining system not causing abnormality even when abnormality occurs in the system is required. An example of the system having the redundant function (hereinafter referred to as a redundant system) includes a fully redundant system. The fully redundant system includes usual devices and backup devices required for autonomous traveling of a vehicle, for example, driving assistance devices, drive control devices, and sensors. The number of devices mounted on the vehicle increases in the fully redundant system, and this affects the cost of the vehicle. Additionally, a proportion of the space occupied by the devices inside the vehicle increases, and this affects the layout inside the vehicle. In consideration of the problems in the fully redundant system mentioned above, the redundant system 100 according to this embodiment allows reducing the cost and enhancing a degree of freedom of the layout without losing operation safety performance with a configuration described below.

Using Fig. 1, a power supply system of the electric vehicle will be described. The electric vehicle includes a driving battery 1 as a driving source. As illustrated in Fig. 1, the driving battery 1 is connected to a first power supply system 3 and a second power supply system 4 via a DCDC converter 2.

Voltage of the driving battery 1 is input to the DCDC converter 2. The DCDC converter 2 is a converter that steps down the voltage of the driving battery 1. The voltage stepped down by the DCDC converter 2 is output to a first battery 5 connected to the first power supply system 3 and a second battery 6 connected to the second power supply system 4. The first battery 5 and the second battery 6 are charged by electric power from the driving battery 1.

The redundant system 100 of this embodiment includes the first power supply system 3 and the second power supply system 4. The respective first power supply system 3 and second power supply system 4 are power supply systems configured by single power supplies different from one another. In the following description, although it is described that the voltage of the first power supply system 3 is same as the voltage of the second power supply system 4, the voltage of the first power supply system 3 and the voltage of the second power supply system 4 may differ. Additionally, the number of the power supply systems provided with the redundant system 100 only needs to be at least two. The redundant system 100 may have another power supply system in addition to the first power supply system 3 and the second power supply system 4.

The first power supply system 3 is a power supply system configured with the first battery 5 as a power supply. The first battery 5 and a first on-board equipment group 8 are connected to the first power supply system 3. The first on-board equipment group 8 is connected to the first power supply system 3 and is not connected to the second power supply system 4. The first power supply system 3 includes wiring (also referred to as a power supply line of the first power supply system) that connects the first battery 5 and the first on-board equipment group 8.

The first battery 5 is a storage battery that supplies the first on-board equipment group 8 with electric power. An example of the first battery 5 includes a lead-acid battery that allows outputting voltage of 12 V, but the first battery 5 may be another storage battery. The first on-board equipment group 8 will be described later.

The second power supply system 4 is a power supply system configured with the second battery 6 as a power supply. The second power supply system 4 is a power supply system different from the first power supply system 3. The second battery 6 and a second on-board equipment group 9 are connected to the second power supply system 4. The second on-board equipment group 9 is connected to the second power supply system 4 and is not connected to the first power supply system 3. The second power supply system 4 includes wiring (also referred to as a power supply line of the second power supply system) that connects the second battery 6 and the second on-board equipment group 9.

The second battery 6 is a storage battery that supplies the second on-board equipment group 9 with electric power. An example of the second battery 6 includes a lithium-ion battery that allows outputting voltage of 12 V, but the second battery 6 may be another storage battery. The second on-board equipment group 9 will be described later.

In this embodiment, the first power supply system 3 and the second power supply system 4 are connected via a change-over device 7. The change-over device 7 is a device that electrically makes or breaks conduction between the first power supply system 3 and the second power supply system 4. The change-over device 7 operates according to a control signal input from a first power supply monitor ECU 14 or a second power supply monitor ECU 24 described later. When the control signal is input, the change-over device 7 breaks conduction between the first power supply system 3 and the second power supply system 4. On the other hand, when the control signal is not input, the change-over device 7 electrically makes conduction between the first power supply system 3 and the second power supply system 4. An example of the change-over device 7 includes a semiconductor switch. Note that the change-over device 7 is not limited to the semiconductor switch, and it is only necessary to be a device that can electrically connect and break conduction between the power supply line of the first power supply system 3 and the power supply line of the second power supply system 4.

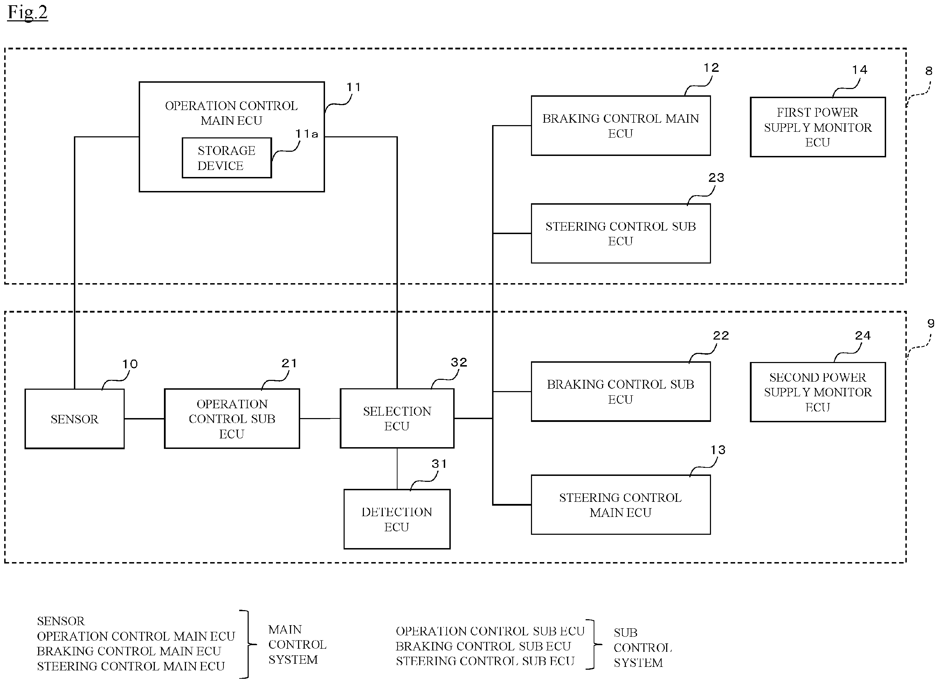

Next, the configuration of the redundant system 100 will be described using Fig. 2. Fig. 2 is a block diagram of the redundant system 100 according to this embodiment. As illustrated in Fig. 2, the redundant system 100 includes a sensor 10, an operation control main ECU 11, a braking control main ECU 12, and a steering control main ECU 13 as a main control system. The ECU is an abbreviated name of an Electronic Control Unit. In the following description, the description will be given with a control system including the sensor 10, the operation control main ECU 11, the braking control main ECU 12, and the steering control main ECU 13 as the main control system. Note that the number of ECUs constituting the main control system is not limited, and the main control system may include an ECU other than the ECUs illustrated in Fig. 2.

Additionally, the redundant system 100 includes an operation control sub ECU 21, a braking control sub ECU 22, and a steering control sub ECU 23 as a sub control system. In the following description, the description will be given with a control system including the operation control sub ECU 21, the braking control sub ECU 22, and the steering control sub ECU 23 as the sub control system. It is assumed that the sub control system includes at least the operation control sub ECU 21. Note that the number of ECUs constituting the sub control system is not limited, and the sub control system may include an ECU other than the ECUs illustrated in Fig. 2.

Furthermore, the redundant system 100 includes the first power supply monitor ECU 14 that monitors voltage of the first power supply system 3 and the second power supply monitor ECU 24 that monitors voltage of the second power supply system 4. In addition, the redundant system 100 includes the sensor 10, a detection ECU 31, and a selection ECU 32.

For mutual transmission and reception of information, the respective devices illustrated in Fig. 2 are connected with, for example, any on-board network (such as Ethernet) including Controller Area Network (CAN). Note that the type of the on-board network is not specifically limited in the redundant system 100. Additionally, while Fig. 2 illustrates the connecting relationship of the respective devices by the solid lines, the respective devices are also connected at positions not indicated by the solid lines and the mutual transmission and reception of information can be performed.

The sensor 10 is a sensor that is operated by electric power of the second battery 6 and detects surrounding information of the vehicle. The type and the number of sensors constituting the sensor 10 are not specifically limited. For example, the sensor 10 may be configured by one type or a plurality of types of sensors. Additionally, the sensor 10 may be configured by one or a plurality of sensors of the same type. Further, the sensor 10 may be configured by a plurality of sensors of a plurality of types. When the sensor 10 is configured by the sensors of plurality of types, the plurality of sensors of the same type, or a combination of them, in the following description, "the sensor 10" can be replaced by a "sensor group 10."

In this embodiment, the sensor 10 includes at least any one of a front camera that obtains an image ahead of the vehicle, a front radar that detects a distance from the vehicle to a preceding vehicle ahead of the vehicle or an obstacle by radio wave, and a front Lidar that detects a distance from the vehicle to a preceding vehicle ahead of the vehicle or an obstacle by laser light. The sensor 10 only needs to include at least the above-mentioned sensor disposed on the front side of the vehicle. For example, in addition to the sensor disposed on the front side of the vehicle, the sensor 10 may include a sensor (a side camera, a side radar, or a side Lidar) disposed on the side of the vehicle, and a sensor (a rear camera, a rear radar, or a rear Lidar) disposed at the rear of the vehicle. The surrounding information of the vehicle detected by the sensor 10 includes information on a road, such as a lane borderline and a road shape, information on traffic regulation, such as a signal and a traffic sign, and information on an interference of traveling of the vehicle, such as a preceding vehicle and an oncoming car, a bicycle, and a pedestrian. The surrounding information of the vehicle is output to the operation control main ECU 11 and the operation control sub ECU 21 at predetermined time intervals.

The devices having the names of ECUs among the plurality of devices illustrated in Fig. 2 are configured by Read Only Memories (ROMs) storing programs for performing various control, Central Processing Units (CPUs) stored in the ROMs, and Random Access Memories (RAMs) that function as accessible storage devices. Each of the ECUs is what is called a computer, and in the following description, among the name of each ECU, the "ECU" part may be read differently as a "control device," a "controller," a "control unit," or a "processor." With an example of the operation control main ECU 11, the expression "operation control main ECU 11" is synonymous with the expressions "operation control main control device 11," "operation control main controller 11," "operation control main control unit 11," or "operation control main processor 11." Since the description of the other ECUs is similar to the description using the operation control main ECU 11, the description is employed.

The operation control main ECU 11 is a main computer operated by electric power of the first battery 5 and having an autonomous driving control function. The operation control main ECU 11 is an entity that drives the vehicle that autonomously travels. The autonomous driving control function that the operation control main ECU 11 has includes, for example, a lane center maintenance function that controls steering for traveling in the vicinity of the lane center, a lane keeping function that controls a lateral position for traveling on the same lane, a lane change assistance function for movement from a lane during traveling to another lane, an overtaking assistance function for passing through a lateral side of another forward vehicle (adjacent lane) to move forward, a route traveling assistance function that autonomously changes a lane for tracing a route led to a destination, and a preceding vehicle following function that travels while maintaining a vehicle-to-vehicle distance between the preceding vehicle that travels ahead of own vehicle and the own vehicle on the same lane at a predetermined distance.

The detection result by the sensor 10 is input to the operation control main ECU 11. The operation control main ECU 11 performs a process to cause the vehicle to travel along a predetermined target track based on the detection result by the sensor 10 with the autonomous driving control function. Note that the predetermined target track may be a target track operated by the operation control main ECU 11 or may be a target track operated by another ECU (not illustrated).

For example, the operation control main ECU 11 operates the lateral position of the vehicle based on the detection result by the sensor 10 and grasps the relative positional relationship between the lane and the lane borderline with the autonomous driving control function. The lateral position of the vehicle is the relative position of the vehicle to the lane borderline present on the right or left of the vehicle and is the position of the vehicle along a direction perpendicular to the traveling direction of the vehicle. The operation control main ECU 11 operates a target braking value and a target steering value for traveling on the same lane based on the lateral position of the vehicle. The same lane means the lane that is the same as the lane on which the vehicle is traveling. The lane borderline is a boundary for distinction between the lane on which the vehicle travels and another lane. The configuration of the lane borderline is not especially limited, and the lane borderline includes a white line on a road surface, a guardrail, a curb, and a center divider.

For example, the operation control main ECU 11 operates a vertical position of the vehicle based on the detection result by the sensor 10 and grasps the relative positional relationship between the vehicle and the preceding vehicle with the autonomous driving control function. The vertical position of the vehicle is the relative position of the vehicle to the preceding vehicle on the same lane and is the position of the vehicle along the traveling direction of the vehicle. The operation control main ECU 11 operates the target braking value and the target steering value for maintaining the vehicle-to-vehicle distance to the preceding vehicle to a predetermined distance based on the vertical position of the vehicle. The target braking value and the target steering value operated by the operation control main ECU 11 are output to the selection ECU 32. Note that in this embodiment, the preceding vehicle is a vehicle that travels ahead of the vehicle on the same lane.

The operation control main ECU 11 includes a storage device 11a to store a past arithmetic operation result by the operation control main ECU 11. The situation in which the past arithmetic operation result stored in the storage device 11a is used will be described later. Examples of the storage device 11a include a RAM, a ROM, and a Hard Disk Drive (HDD), which are volatile storage media, and a Flash Memory, which is a non-volatile storage medium. The type of a storage device 11a is not specifically limited. The operation control main ECU 11 causes the storage device 11a to store, for example, the lateral position of the vehicle, the vertical position of the vehicle, the target braking value, and the target steering value as the arithmetic operation results at predetermined cycles.

The braking control main ECU 12 is a main computer operated by electric power of the first battery 5 and having an autonomous braking control function. The target braking value is input from the operation control main ECU 11 or the operation control sub ECU 21 to the braking control main ECU 12 via the selection ECU 32. The braking control main ECU 12 controls an operation of a brake actuator based on the target braking value to control a brake of the vehicle. Note that the braking control main ECU 12 may have a function of controlling an operation of a driving mechanism to adjust acceleration/deceleration of the vehicle and a vehicle speed (an operation of a traveling motor in the case of an electric vehicle).

The steering control main ECU 13 is a main computer operated by electric power of the second battery 6 and having an autonomous steering control function. The target steering value is input from the operation control main ECU 11 or the operation control sub ECU 21 to the steering control main ECU 13 via the selection ECU 32. The steering control main ECU 13 controls an operation of a steering actuator based on the target steering value to control the steering of the vehicle.

The first power supply monitor ECU 14 is a computer for monitoring supply of electric power to the first power supply system 3. Specifically, the first power supply monitor ECU 14 monitors output voltage of the first battery 5 based on a detection result by a voltage sensor (not illustrated) connected to the first power supply system 3. The output voltage of the first battery 5 is voltage of the power supply line of the first power supply system 3.

When the voltage of the power supply line of the first power supply system 3 is within a predetermined range, the first power supply monitor ECU 14 outputs a signal indicating that the first power supply system 3 is normal to the operation control main ECU 11 and the operation control sub ECU 21. On the other hand, when the voltage of the power supply line of the first power supply system 3 is outside a predetermined range, the first power supply monitor ECU 14 outputs a signal indicating that abnormality occurs in the first power supply system 3 to the operation control main ECU 11, the operation control sub ECU 21, and the detection ECU 31. The case in which the voltage of the power supply line of the first power supply system 3 becomes outside the predetermined range includes a case in which an output terminal of the DCDC converter 2 connected to the first power supply system 3 or a wire harness constituting the power supply line of the first power supply system 3 is shorted to the ground (Short Fail), a case in which electrical conduction is broken between the output terminal of the DCDC converter 2 and the first power supply system 3 (Open Fail), and an output voltage of the DCDC converter 2 becomes outside a predetermined range. Note that the predetermined range is a range set based the voltage of the first battery 5 and regulations on the operation safety of the vehicle.

The operation control sub ECU 21 is a sub computer operated by electric power of the second battery 6 and having the autonomous driving control function. The operation control sub ECU 21 is an ECU for backup used instead of the operation control main ECU 11 when the detection ECU 31 detects abnormality regarding the operation control main ECU 11. When the detection ECU 31 detects the abnormality regarding the operation control main ECU 11, the operation control sub ECU 21 serves as an entity of driving the vehicle instead of the operation control main ECU 11 from when the operation control main ECU 11 requests a driver to recover control of driving until the driver recovers the control of driving. The autonomous driving control function that the operation control sub ECU 21 has may be completely the same as or similar to the autonomous driving control function that the operation control main ECU 11 has or may be a part of the autonomous driving control function that the operation control main ECU 11 has. Note that the operation control main ECU 11 and the operation control sub ECU 21 operate independently without affecting one another.

The detection result by the sensor 10 is input to the operation control sub ECU 21. The operation control sub ECU 21 performs a process to cause the vehicle to autonomously travel based on the detection result by the sensor 10. For example, the operation control sub ECU 21 performs a process to maintain the relative positional relationship between the vehicle and the lane borderline with the autonomous driving control function between before and after detecting abnormality regarding the main control system by the detection ECU 31 described later. The operation control sub ECU 21 operates the lateral position of the vehicle based on the detection result by the sensor 10 to grasp the relative positional relationship between the vehicle and the lane borderline. The operation control sub ECU 21 operates the target braking value and the target steering value for traveling on the same lane based on the lateral position of the vehicle.

For example, the operation control sub ECU 21 performs a process to maintain the relative positional relationship between the vehicle and the preceding vehicle between with the autonomous driving control function before and after detecting abnormality regarding the main control system by the detection ECU 31 described later. The operation control sub ECU 21 operates the vertical position of the vehicle based on the detection result by the sensor 10 to grasp the relative positional relationship between the vehicle and the preceding vehicle. The operation control sub ECU 21 operates the target braking value and the target steering value to maintain the vehicle-to-vehicle distance to the preceding vehicle to a predetermined distance based on the vertical position of the vehicle. The target braking value and the target steering value operated by the operation control sub ECU 21 is output to the selection ECU 32.

The braking control sub ECU 22 is a sub computer operated by electric power of the second battery 6 and having the autonomous braking control function. The braking control sub ECU 22 is an ECU for backup used instead of the braking control main ECU 12 when the detection ECU 31 detects abnormality regarding the braking control main ECU 12.

The target braking value is input from the operation control main ECU 11 or the operation control sub ECU 21 to the braking control sub ECU 22 via the selection ECU 32. The braking control sub ECU 22 controls the brake actuator based on the target braking value with the autonomous braking control function. The autonomous braking control function that the braking control sub ECU 22 has is preferably completely the same as the autonomous braking control function that the braking control main ECU 12 has.

The steering control sub ECU 23 is a sub computer operated by electric power of the first battery 5 and having the autonomous steering control function. The steering control sub ECU 23 is an ECU for backup used instead of the steering control main ECU 13 when the detection ECU 31 detects abnormality regarding the steering control main ECU 13.

The target steering value is input from the operation control main ECU 11 or the operation control sub ECU 21 to the steering control sub ECU 23 via the selection ECU 32. The steering control sub ECU 23 controls the steering actuator based on the target steering value with the autonomous steering control function. The autonomous steering control function that the steering control sub ECU 23 has is preferably completely the same as the autonomous steering control function that the steering control main ECU 13 has.

The second power supply monitor ECU 24 is a computer for monitoring supply of electric power to the second power supply system 4. Specifically, the second power supply monitor ECU 24 monitors output voltage of the second battery 6 based on a detection result of a voltage sensor (not illustrated) connected to the second power supply system 4. The output voltage of the second battery 6 is voltage of the power supply line of the second power supply system 4.

When the voltage of the second power supply system 4 is within a predetermined range, the second power supply monitor ECU 24 outputs a signal indicating that the second power supply system 4 is normal to the operation control main ECU 11 and the operation control sub ECU 21. On the other hand, when the voltage of the second power supply system 4 is outside a predetermined range, the second power supply monitor ECU 24 outputs a signal indicating that abnormality occurs in the second power supply system 4 to the operation control main ECU 11, the operation control sub ECU 21, and the detection ECU 31. Since the case in which the voltage of the second power supply system 4 is outside the predetermined range can be described by replacing the "first power supply system 3" with the "second power supply system 4" in the content described about the first power supply monitor ECU 14, the description thereof will be employed.

The detection ECU 31 is a computer operated by electric power of the second battery 6 to detect abnormality regarding the main control system. The abnormality regarding the main control system includes abnormality regarding the sensor 10, abnormality regarding the operation control main ECU 11, abnormality regarding the braking control main ECU 12, and abnormality regarding the steering control main ECU 13.

The abnormality regarding the sensor 10 includes abnormality in the sensor 10, abnormality in an on-board network connected to the sensor 10, and abnormality in the second power supply system 4. The abnormality regarding the operation control main ECU 11 includes abnormality in the operation control main ECU 11, abnormality in the on-board network connected to the ECU, and abnormality in the first power supply system 3. The abnormality regarding the braking control main ECU 12 includes abnormality in the braking control main ECU 12, abnormality in the on-board network connected to the ECU, and abnormality in the first power supply system 3. The abnormality regarding the steering control main ECU 13 includes abnormality in the steering control main ECU 13, abnormality in the on-board network connected to the ECU, and abnormality in the second power supply system 4. Note that the abnormality in the on-board network includes a communication failure and physical poor connection of the network.

The detection ECU 31 determines that abnormality occurs in the main control system based on the signal indicating the abnormality in at least any one of the ECUs among the operation control main ECU 11, the braking control main ECU 12, and the steering control main ECU 13 or the signal indicating the abnormality in the on-board network connected to these ECUs from the operation control main ECU 11. Additionally, when the signal indicating the abnormality in the first power supply system 3 is input from the first power supply monitor ECU 14 or when the signal indicating the abnormality in the second power supply system 4 is input from the second power supply monitor ECU 24, the detection ECU 31 determines that abnormality occurs in the main control system. Additionally, when the signal indicating the abnormality in the sensor 10 or the signal indicating the abnormality in the on-board network connected to the sensor 10 is input from the sensor 10, the detection ECU 31 determines that abnormality occurs in main control system. When the detection ECU 31 determines that abnormality occurs in the main control system, the detection ECU 31 outputs a signal indicating that continuation of the operation control of the vehicle by the main control system is difficult or impossible to the selection ECU 32. Additionally, the detection ECU 31 outputs a signal with which the type of abnormality is distinguishable by the selection ECU 32 to the selection ECU 32.

On the other hand, when the above-mentioned signal is not input from the operation control main ECU 11, the first power supply monitor ECU 14, the second power supply monitor ECU 24, or the sensor 10, the detection ECU 31 determines that abnormality does not occur in the main control system.

The selection ECU 32 is a computer for selecting an operation target ECU. Additionally, the selection ECU 32 is a computer for selecting the target braking value and the target steering value transferred to the operation target ECU. The selection ECU 32 selects an ECU for braking control of the operation target and selects an ECU for steering control of the operation target based on the signal input from the detection ECU 31. Further, the selection ECU 32 selects a target braking value transferred to the ECU for braking control of the operation target and selects a target steering value transferred to the ECU for steering control of the operation target based on the signal input from the detection ECU 31. On the other hand, when a signal is not input from the detection ECU 31, the selection ECU 32 transfers the target braking value operated by the operation control main ECU 11 to the braking control main ECU 12, and transfers the target steering value operated by the operation control main ECU 11 to the steering control main ECU 13. The operation of the selection ECU 32 will be described later.

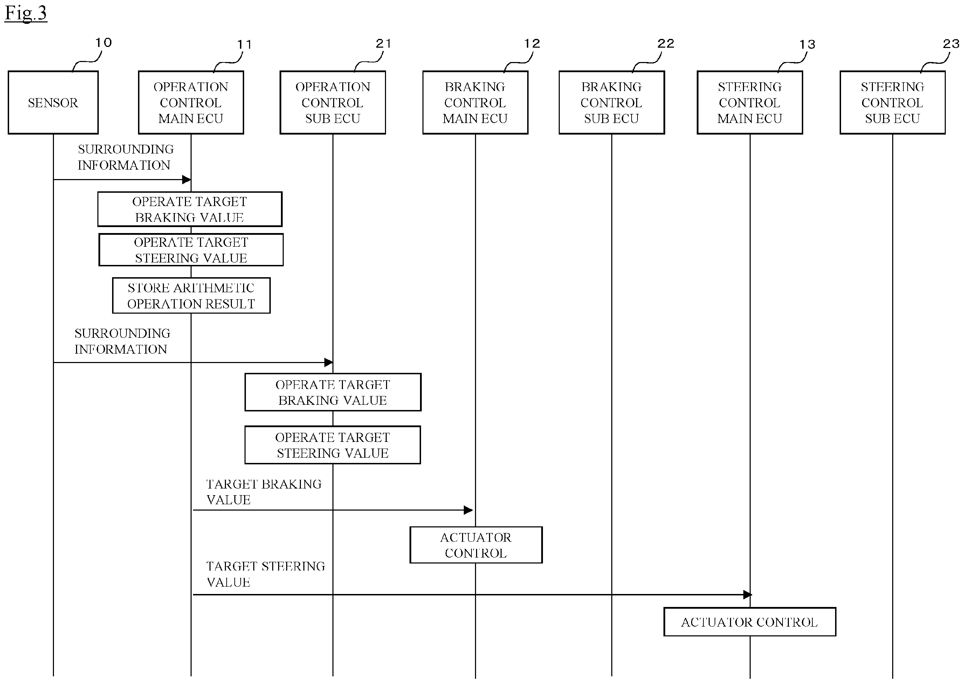

Next, using Fig. 3 to Fig. 6, the operation of the redundant system 100 when abnormality does not occur in the main control system and the operation of the redundant system 100 when abnormality occurs in the main control system will be described. In Fig. 3 to Fig. 6, the reference numerals same as the reference numerals indicated in Fig. 2 are given to the devices corresponding to the devices illustrated in Fig. 2.

Fig. 3 is an explanatory view illustrating the operation of the redundant system 100 when abnormality does not occur in the main control system. As illustrated in Fig. 3, the surrounding information is input from the sensor 10 to the operation control main ECU 11 and the operation control sub ECU 21.

The operation control main ECU 11 operates the lateral position and the vertical position of the vehicle based on the detection result by the sensor 10 and operates the target braking value and the target steering value based on the operated lateral position and vertical position of the vehicle. Additionally, the operation control main ECU 11 causes the storage device 11a to store the arithmetic operation result. The operation control main ECU 11 outputs the target braking value and the target steering value to the selection ECU 32.

The operation control sub ECU 21 operates the lateral position and the vertical position of the vehicle based on the detection result by the sensor 10 and operates the target braking value and the target steering value based on the operated lateral position and vertical position of the vehicle. The operation control sub ECU 21 outputs the target braking value and the target steering value to the selection ECU 32.

Since the signal indicating that abnormality occurs in the main control system is not output from the detection ECU 31, the selection ECU 32 transfers the target braking value operated by the operation control main ECU 11 to the braking control main ECU 12 and transfers the target steering value operated by the operation control main ECU 11 to the steering control main ECU 13. The braking control main ECU 12 controls the brake actuator based on the input target braking value. Additionally, the steering control main ECU 13 controls the steering actuator based on the input target steering value.

The operation of the redundant system 100 illustrated in Fig. 3 is performed at predetermined cycles. This allows the vehicle to autonomously travel along the predetermined target track and to achieve automated driving according to the driving assistance level 3.

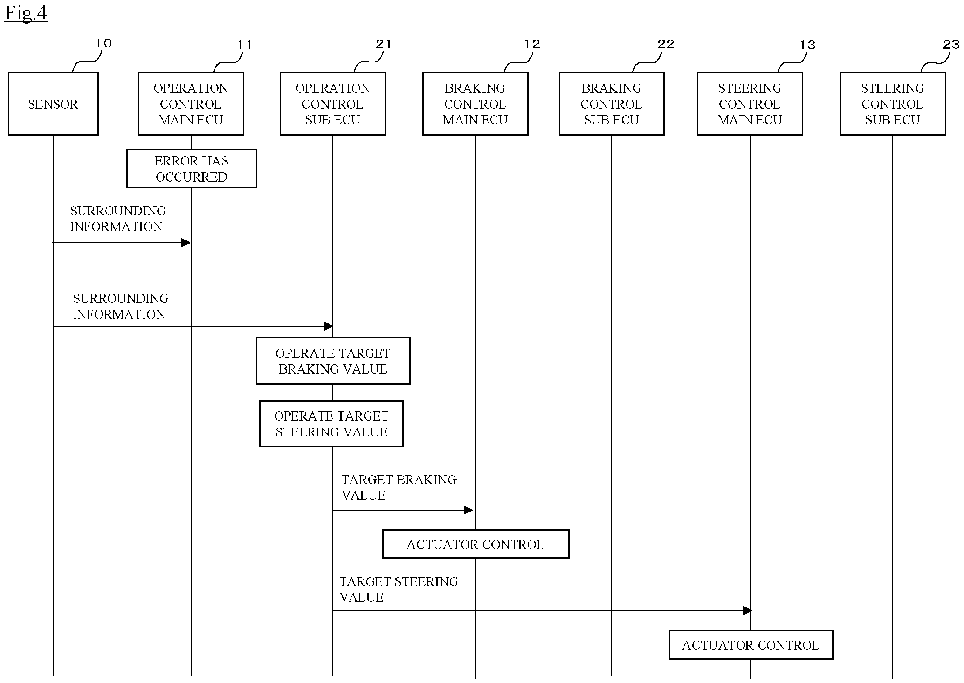

Fig. 4 is an explanatory view describing the operation of the redundant system 100 when abnormality occurs in the operation control main ECU 11. When any abnormality occurs in the operation control main ECU 11, the operation control main ECU 11 outputs a signal indicating the abnormality in the operation control main ECU 11 to the detection ECU 31 by self-diagnostic function. The detection ECU 31 outputs a signal indicating that abnormality occurs in the main control system to the selection ECU 32. At this time, the operation control main ECU 11 notifies the driver of the abnormality in the main control system and requests the driver to recover the control of driving (also referred to as takeover request). For example, the operation control main ECU 11 displays a warning lamp at a predetermined position on an instrument panel to perform the takeover request to the driver.

The operation control sub ECU 21 operates the lateral position and the vertical position of the vehicle based on the detection result by the sensor 10 and operates the target braking value and the target steering value based on the operated lateral position and vertical position of the vehicle. The operation control sub ECU 21 outputs the target braking value and the target steering value to the selection ECU 32. The target braking value and the target steering value operated by the operation control sub ECU 21 are the target braking value and the target steering value to avoid the vehicle to depart from the lane from when the takeover request is performed to the driver until the driver recovers the control of driving. Additionally, when a preceding vehicle is present on the same lane, the target braking value and target steering value operated by the operation control sub ECU 21 are the target braking value and the target steering value to maintain the vehicle-to-vehicle distance between the vehicle and the preceding vehicle to a predetermined distance from when the takeover request is performed to the driver until the driver recovers the control of driving.

When the signal input from the detection ECU 31 is the signal indicating the abnormality in the operation control main ECU 11, the selection ECU 32 selects the braking control main ECU 12 as the ECU for braking control of the operation target and selects the steering control main ECU 13 as the ECU for steering control of the operation target. Additionally, the selection ECU 32 transfers the target braking value operated by the operation control sub ECU 21 to the braking control main ECU 12 and transfers the target steering value operated by the operation control sub ECU 21 to the steering control main ECU 13. The braking control main ECU 12 controls the brake actuator based on the input target braking value. Additionally, the steering control main ECU 13 controls the steering actuator based on the input target steering value.

Note that the operation of the redundant system 100 illustrated in Fig. 4 can be used, not only in the case where the abnormality occurs in the operation control main ECU 11, but also in the case where the abnormality occurs in the on-board network connected to the operation control main ECU 11. In this case, a signal indicating that abnormality occurs in the on-board network connected to the operation control main ECU 11 is input from the operation control main ECU 11 to the detection ECU 31.

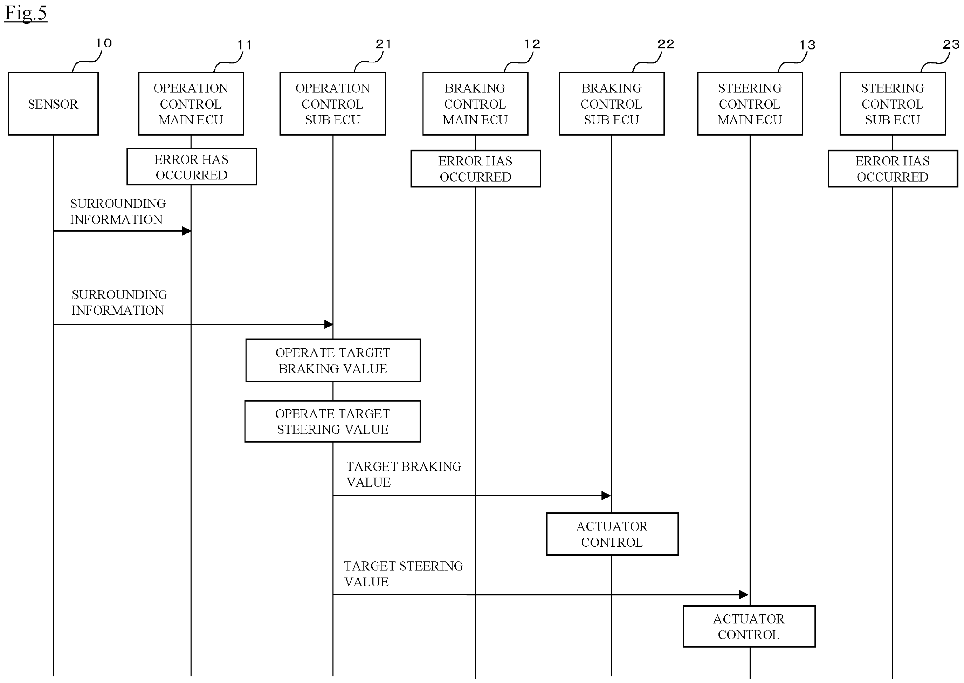

Fig. 5 is an explanatory view describing the operation of the redundant system 100 when abnormality occurs in the first power supply system 3. The description will be given with an assumption that when abnormality occurs in the first power supply system 3, the operation control main ECU 11, the braking control main ECU 12, or the steering control sub ECU 23, which is driven by electric power of the first battery 5, cannot be normally operated. That is, when abnormality occurs in the first power supply system 3, each of the operation control main ECU 11, the braking control main ECU 12, and the steering control sub ECU 23 enters a state similar to a state in which abnormality occurs.

When any abnormally occurs in the first power supply system 3, the first power supply monitor ECU 14 outputs the signal indicating abnormality in the first power supply system 3 to the detection ECU 31. The detection ECU 31 outputs the signal indicating that the abnormality occurs in the main control system to the selection ECU 32. At this time, instead of the operation control main ECU 11, the operation control sub ECU 21 performs takeover request to the driver. Note that when the operation control main ECU 11 is operable, the operation control main ECU 11 may perform the takeover request to the driver.

Additionally, when abnormality occurs in the first power supply system 3, the first power supply monitor ECU 14 outputs a control signal to the change-over device 7. When the control signal is input from the first power supply monitor ECU 14, the change-over device 7 breaks conduction between the first power supply system 3 and the second power supply system 4.

When the change-over device 7 breaks conduction between the first power supply system 3 and the second power supply system 4, the first battery 5 supplies electric power according to the remaining amount of charge to the first on-board equipment group 8, and the second battery 6 supplies electric power according to the remaining amount of charge to the second on-board equipment group 9. Thus, from when the takeover request is performed to the driver until the driver recovers the control of driving, at least the second on-board equipment group 9 continues the operation control of the vehicle.

Since the operation of the operation control sub ECU 21 is similar to the operation of the operation control sub ECU 21 illustrated in Fig. 4, the description in Fig. 4 is employed.

When the signal from the detection ECU 31 is the signal indicating the abnormality in the first power supply system 3, the selection ECU 32 selects the braking control sub ECU 22 as the ECU for braking control of the operation target and selects the steering control main ECU 13 as the ECU for steering control of the operation target. Additionally, the selection ECU 32 transfers the target braking value operated by the operation control sub ECU 21 to the braking control sub ECU 22 and transfers the target steering value operated by the operation control sub ECU 21 to the steering control main ECU 13. The braking control sub ECU 22 controls the brake actuator based on the input target braking value. Additionally, the steering control main ECU 13 controls the steering actuator based on the input target steering value.

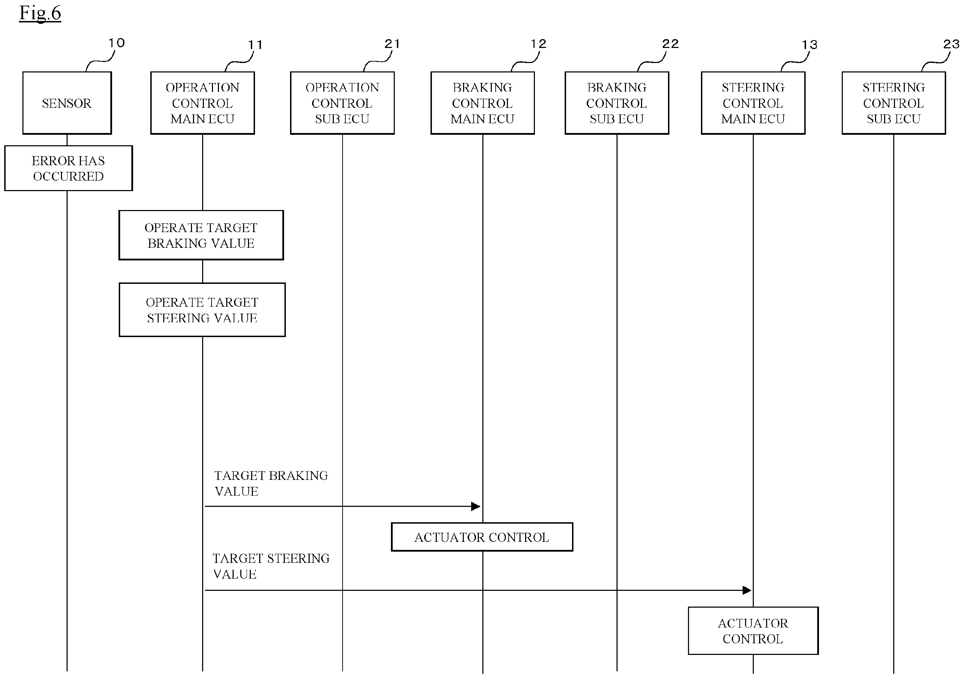

Fig. 6 is an explanatory view describing the operation of the redundant system 100 when abnormality occurs in the sensor 10. When any abnormality occurs in the sensor 10, the sensor 10 outputs the signal indicating the abnormality in the sensor 10 to the detection ECU 31. The detection ECU 31 outputs the signal indicating the abnormality in the sensor 10 to the selection ECU 32. At this time, the operation control main ECU 11 performs takeover request to the driver.

When abnormality occurs in the sensor 10, the operation control main ECU 11 operates the lateral position and the vertical position of the vehicle based on the past arithmetic operation result stored in the storage device 11a. For example, the operation control main ECU 11 changes the sequence of the lateral positions and the vertical positions of the vehicle stored in the storage device 11a in chronological order to estimate the position of the lane borderline with respect to the vehicle and the position of the preceding vehicle with respect to the vehicle before the abnormality occurs in the sensor 10. The operation control main ECU 11 operates the target braking value and the target steering value based on the estimated position of the lane borderline and position of the preceding vehicle. For example, the target braking value operated by the operation control sub ECU 21 is a target braking value for gradual deceleration of the vehicle from when the takeover request is performed to the driver until the driver recovers the control of driving. The operation control main ECU 11 outputs the target braking value and the target steering value to the selection ECU 32.

When the signal from the detection ECU 31 is the signal indicating the abnormality in the sensor 10, the selection ECU 32 selects the braking control main ECU 12 as the ECU for braking control of the operation target and selects the steering control main ECU 13 as the ECU for steering control of the operation target. Additionally, the selection ECU 32 transfers the target braking value operated by the operation control main ECU 11 to the braking control main ECU 12 and transfers the target steering value operated by the operation control main ECU 11 to the steering control main ECU 13. The braking control main ECU 12 controls the brake actuator based on the input target braking value. Additionally, the steering control main ECU 13 controls the steering actuator based on the input target steering value.

Thus, even when abnormality occurs in the sensor of the main control system, the redundant system 100 according to this embodiment allows continuing the autonomous traveling of the vehicle from when the takeover request is performed to the driver until the driver recovers the control of driving without using the sensor. That is, the redundant system 100 allows maintaining the operation safety performance similar to the case where a sensor for backup is disposed even without disposing the sensor for backup. Additionally, the redundant system 100 eliminates the need for providing a space for disposing the sensor for backup and allows increasing a degree of freedom of layout. Moreover, since the number of devices mounted on the vehicle can be reduced, the cost can be reduced.

As described above, the redundant system 100 according to this embodiment is mounted on a vehicle that can autonomously travel and includes the first power supply system 3 and the second power supply system 4. The redundant system 100 further includes the operation control main ECU 11 that performs the process to cause the vehicle to autonomously travel, and the operation control sub ECU 21 used instead of the operation control main ECU 11 when abnormality regarding an operation control main ECU 11 is detected. In this embodiment, the operation control main ECU 11 is connected to the first power supply system 3 and is not connected to the second power supply system 4, and the operation control sub ECU 21 is connected to the second power supply system 4 and is not connected to the first power supply system 3. Each of the operation control main ECU 11 and the operation control sub ECU 21 is connected to the first power supply system 3 or the second power supply system 4, which is a single power supply system, and therefore the connecting relationship between the operation control ECU and the power supply system can be simplified and the design scale of the system can be decreased.

Additionally, the redundant system 100 according to this embodiment includes the sensor 10 that detects the information around the vehicle and outputs the detection result to the operation control main ECU 11 and the operation control sub ECU 21. The sensor 10 is connected to the second power supply system 4 and is not connected to the first power supply system 3. As described using Fig. 4 and Fig. 5, when abnormality occurs in the main control system, the target braking value input to the ECU for braking control is switched from the target braking value operated by the operation control main ECU 11 to the target braking value operated by the operation control sub ECU 21 in some cases. The same applies to the target steering value input to the ECU for steering control. There may be a case where the lateral position and the vertical position of the vehicle operated by the operation control main ECU 11 do not always match the lateral position and the vertical position of the vehicle operated by the operation control sub ECU 21. In the case, since an error occurs in the lateral position and the vertical position of the vehicle between before and after the abnormality occurs in the main control system, the operation control sub ECU 21 needs to correct the lateral position and the vertical position of the vehicle based on the detection result by the sensor 10 to keep continuity of the lateral position and the vertical position of the vehicle. In this embodiment, since the sensor 10 is connected to the second power supply system 4, even when abnormality occurs in the first power supply system 3, the operation control sub ECU 21 can correct the lateral position and the vertical position of the vehicle based on the detection result by the sensor 10. Consequently, from when the takeover request is performed to the driver until the driver recovers the control of driving, the relative positional relationship between the lane borderline and the vehicle can be continued, and this allows reducing departure of the vehicle from the lane.

Furthermore, the redundant system 100 according to this embodiment includes the detection ECU 31 that detects the abnormality regarding the main control system. The abnormality regarding the main control system includes at least any one of abnormality regarding the operation control main ECU 11, abnormality regarding the first power supply system 3, and abnormality regarding the sensor 10. Thus, when any abnormality occurs in the main control system, the takeover request can be performed to the driver.

In addition, in this embodiment, the sensor 10 detects the lane borderline as the information around the vehicle. The lane borderline is the boundary between the lane on which the vehicle travels and one other than the lane. Additionally, the operation control sub ECU 21 performs a process to maintain the relative positional relationship between the vehicle and the lane borderline between before and after detecting abnormality regarding the main control system by the detection ECU 31. Accordingly, the vehicle can travel so as not to depart from the lane from when the takeover request is performed to the driver until the driver recovers the control of driving.

In this embodiment, the sensor 10 detects the preceding vehicle, which travels ahead of the vehicle on the lane same as the lane on which the vehicle travels, as the information around the vehicle. Additionally, the operation control sub ECU 21 performs a process to maintain the relative positional relationship between the vehicle and the preceding vehicle between before and after detecting abnormality regarding the main control system by the detection ECU 31. Accordingly, the vehicle can travel while maintaining the vehicle-to-vehicle distance to the preceding vehicle from when the takeover request is performed to the driver until the driver recovers the control of driving.

Furthermore, in this embodiment, the operation control main ECU 11 includes the storage device 11a that stores the past arithmetic operation result by the operation control main ECU 11. When the detection ECU 31 detects the abnormality regarding the sensor 10, the operation control main ECU 11 operates the position of the vehicle on the lane based on the arithmetic operation result stored in the storage device 11a. Thus, even when the position of the lane borderline cannot be detected using the sensor 10 due to the abnormally in the sensor 10, from when the takeover request is performed to the driver until the driver recovers the control of driving, the vehicle can travel so as not to depart from the lane.

In addition, the redundant system 100 according to this embodiment includes the change-over device 7 that electrically makes or breaks conduction between the first power supply system 3 and the second power supply system 4. When the detection ECU 31 detects abnormality in the first power supply system 3, the operation control sub ECU 21 controls the change-over device 7 to break off conduction between the first power supply system and the second power supply system. This allows reducing a spread of the abnormality occurred in the first power supply system 3 to the second power supply system 4. The second on-board equipment group 9 allows the vehicle to continue the autonomous traveling from when the takeover request is performed to the driver until the driver recovers the control of driving.

The redundant system 100 according to this embodiment includes the steering control main ECU 13 that controls the steering of the vehicle based on the control of the operation control main ECU 11 or the target steering value input from the operation control sub ECU 21 and the steering control sub ECU 23 used instead of the steering control main ECU 13 when the abnormality regarding the steering control main ECU 13 is detected. The steering control main ECU 13 is connected to the second power supply system 4 and is not connected to the first power supply system 3, and the steering control sub ECU 23 is connected to the first power supply system 3 and is not connected to the second power supply system 4. Accordingly, even when the abnormality occurs in the first power supply system 3, the steering control of the vehicle by the steering control main ECU 13 is continued. Jerk in steering control can be reduced in before and after the abnormality occurs in the first power supply system 3.

The embodiments described above are described for ease of understanding the present invention, and not described to limit the present invention. Accordingly, the components disclosed in the above-described embodiments are each intended to include all the changes of design and equivalents within the technical scope of the present invention.

For example, in this embodiment, the first power supply monitor ECU 14 or the second power supply monitor ECU 24 is described as the device that detects the abnormality in the first power supply system 3 or the abnormality in the second power supply system 4, but the first power supply monitor ECU 14 and the second power supply monitor ECU 24 may be used for other applications.

The first power supply monitor ECU 14 may be used to determine the start of control by the operation control main ECU 11. For example, in a situation in which an ignition of the vehicle turns on and the voltage of the first power supply system 3 increases, when the first power supply monitor ECU 14 determines that electric power is supplied to the first power supply system 3, the operation control main ECU 11 may start the process to cause the vehicle to autonomously travel. In this case, after the ignition of the vehicle turns on, a signal indicating normality of the first power supply system 3 is input from the first power supply monitor ECU 14 to the operation control main ECU 11 for the first time. Since the operation control main ECU 11 can start the process in a state of sufficient electric power being supplied from the first battery 5, after the ignition turns on, a possibility of sudden change of a behavior of the vehicle can be reduced.

The first power supply monitor ECU 14 and the second power supply monitor ECU 24 may be used to determine termination of control by the operation control main ECU 11. For example, in a situation in which the ignition of the vehicle turns off and the voltage of the first power supply system 3 and the voltage of the second power supply system 4 lower, the operation control main ECU 11 may perform a process to cause the vehicle to autonomously travel until the first power supply monitor ECU 14 determines that electric power is not supplied to the first power supply system 3 and the second power supply monitor ECU 24 determines that electric power is not supplied to the second power supply system 4. In this case, after the ignition of the vehicle turns off, a signal indicating the abnormality in the first power supply system 3 is input from the first power supply monitor ECU 14 to the operation control main ECU 11 for the first time, and a signal indicating the abnormality in the second power supply system 4 is input from the second power supply monitor ECU 24 to the operation control main ECU 11 for the first time. The operation control main ECU 11 can continue the process until a state becomes a state in which neither the first power supply system 3 nor the second power supply system 4 is supplied with electric power. Additionally, even when abnormality occurs in the first power supply system 3, stop of the process by the operation control main ECU 11 can be reduced.

For example, in this embodiment, the description has been given with an example of the configuration of the redundant system 100 in which the steering control main ECU 13 is disposed on the second power supply system 4 side and the steering control sub ECU 23 is disposed on the first power supply system 3 side. However, the redundant system 100 may have a configuration in which the steering control main ECU 13 is disposed on the first power supply system 3 side and the steering control sub ECU 23 is disposed on the second power supply system 4 side.

For example, in this embodiment, the description has been given with an example of the redundant system 100 being mounted on the vehicle that can achieve the driving assistance level 3. However, the redundant system 100 may be mounted on a vehicle that can achieve a driving assistance level 2. For example, the vehicle with the driving assistance level 2 having a mode (also referred to as a hands-off mode) in which the vehicle autonomously travels without the driver touching a steering can obtain an effect similar to the effect obtained by the vehicle that can achieve the driving assistance level 3.

In this embodiment, the description has been given with an example of the case of abnormality in the main control system, and a case in which abnormality occurs in the sub control system will be described. For example, even in a state where abnormality occurs in the second power supply system 4 and the second on-board equipment group 9 cannot operate normally, the vehicle can continue autonomous travelling by the operation control main ECU 11, the braking control main ECU 12, and the steering control sub ECU 23 of the redundant system 100. In this case, the operation control main ECU 11 estimates the lateral position and the vertical position of the vehicle without use of the sensor 10 similarly to the example in which abnormality occurs in the sensor 10.

In this embodiment, the description has been given with an example of the configuration that estimates the lateral position and the vertical position of the vehicle using the past arithmetic operation result stored in the storage device 11a, but the configuration is not limited to this. For example, the operation control main ECU 11 may estimate the lateral position and the vertical position of the vehicle based on a current wheel speed and a current yaw rate. Further, the information used to estimate the lateral position or the vertical position of the vehicle is not limited to the past lateral position or the past vertical position of the vehicle operated by the operation control main ECU 11 but may be the past target braking value and target steering value of the vehicle operated by the operation control main ECU 11.

### DESCRIPTION OF REFERENCE SIGNS

- 1: Driving battery
- 2: DCDC converter
- 3: First power supply system
- 4: Second power supply system
- 5: First battery
- 6: Second battery
- 7: Change-over device
- 8: First on-board equipment group
- 11: Operation control main ECU
- 12: Braking control main ECU
- 14: First power supply monitor ECU
- 23: Steering control sub ECU
- 9: Second on-board equipment group
- 10: Sensor
- 13: Steering control main ECU
- 21: Operation control sub ECU
- 22: Braking control sub ECU
- 24: Second power supply monitor ECU
- 31: Detection ECU
- 32: Selection ECU

## Claims

1. A redundant system mounted on a vehicle configured to autonomously travel, the redundant system at least including a first power supply system and a second power supply system different from the first power supply system, the redundant system comprising:
an operation control main control device that performs a process to cause the vehicle to autonomously travel; and
an operation control sub control device used instead of the operation control main control device when abnormality regarding the operation control main control device is detected, wherein
the operation control main control device is connected to the first power supply system and is not connected to the second power supply system, and
the operation control sub control device is connected to the second power supply system and is not connected to the first power supply system.

2. The redundant system according to claim 1, comprising
a sensor that detects information around the vehicle, the sensor outputting a detection result to the operation control main control device and the operation control sub control device, wherein
the sensor is connected to the second power supply system and is not connected to the first power supply system.

3. The redundant system according to claim 2, comprising
a detection control device that detects abnormality regarding a main control system including the operation control main control device, wherein
the abnormality regarding the main control system includes at least any one of abnormality regarding the operation control main control device, abnormality of the first power supply system, and abnormality regarding the sensor.

4. The redundant system according to claim 3, wherein
the sensor detects a lane borderline as the information around the vehicle, and the lane borderline is a boundary between a lane on which the vehicle travels and one other than the lane, and
the operation control sub control device performs a process to maintain a relative positional relationship between the vehicle and the lane borderline between before and after detecting the abnormality regarding the main control system by the detection control device.

5. The redundant system according to claim 3 or 4, wherein
the sensor detects a preceding vehicle as the information around the vehicle, and the preceding vehicle travels ahead of the vehicle on a lane same as a lane on which the vehicle travels, and
the operation control sub control device performs a process to maintain a relative positional relationship between the vehicle and the preceding vehicle between before and after detecting the abnormality regarding the main control system by the detection control device.

6. The redundant system according to any one of claims 3 to 5, wherein
the operation control main control device:
includes a storage device that stores a past arithmetic operation result by the operation control main control device; and
estimates a position of the vehicle on a lane on which the vehicle travels based on the arithmetic operation result stored in the storage device when the detection control device detects the abnormality regarding the sensor.

7. The redundant system according to any one of claims 3 to 6, comprising
a change-over device that electrically makes or breaks conduction between the first power supply system and the second power supply system, and
the operation control sub control device controls the change-over device to break conduction between the first power supply system and the second power supply system when the detection control device detects abnormality in the first power supply system.

8. The redundant system according to any one of claims 1 to 7, comprising:
a steering control main control device that controls steering of the vehicle based on a target steering value input from the operation control main control device or the operation control sub control device; and
a steering control sub control device used instead of the steering control main control device when abnormality regarding the steering control main control device is detected, wherein
the steering control main control device is connected to the second power supply system and is not connected to the first power supply system, and
the steering control sub control device is connected to the first power supply system and is not connected to the second power supply system.

9. The redundant system according to any one of claims 1 to 8, comprising
a first monitor device that monitors a state of the first power supply system, wherein
when the first monitor device determines that electric power is supplied to the first power supply system, the operation control main control device starts the process to cause the vehicle to autonomously travel.

10. The redundant system according to claim 9, comprising
a second monitor device that monitors a state of the second power supply system, wherein
the operation control main control device performs the process to cause the vehicle to autonomously travel until the first monitor device determines that electric power is not supplied to the first power supply system and the second monitor device determines that electric power is not supplied to the second power supply system.

## Amended claims

### Amended claims under Art. 19.1 PCT

**1.** 10. [Canceled]

**11.** Newly Added] A redundant system mounted on a vehicle configured to autonomously travel, the redundant system at least including a first power supply system and a second power supply system different from the first power supply system, the redundant system comprising:
an operation control main control device that performs a process to cause the vehicle to autonomously travel;
an operation control sub control device used instead of the operation control main control device when abnormality regarding the operation control main control device is detected; and
a sensor that detects information around the vehicle, the sensor outputting a detection result to the operation control main control device and the operation control sub control device, wherein
the operation control main control device is connected to the first power supply system and is not connected to the second power supply system, and
the operation control sub control device and the sensor are connected to the second power supply system and are not connected to the first power supply system.

**12.** Newly Added] The redundant system according to claim 11, comprising
a detection control device that detects abnormality regarding a main control system including the operation control main control device, wherein
the abnormality regarding the main control system includes at least any one of abnormality regarding the operation control main control device, abnormality of the first power supply system, and abnormality regarding the sensor.

**13.** Newly Added] The redundant system according to claim 12, wherein
the sensor detects a lane borderline as the information around the vehicle, and the lane borderline is a boundary between a lane on which the vehicle travels and one other than the lane, and
the operation control sub control device performs a process to maintain a relative positional relationship between the vehicle and the lane borderline between before and after detecting the abnormality regarding the main control system by the detection control device.

**14.** Newly Added] The redundant system according to claim 12 or 13, wherein
the sensor detects a preceding vehicle as the information around the vehicle, and the preceding vehicle travels ahead of the vehicle on a lane same as a lane on which the vehicle travels, and
the operation control sub control device performs a process to maintain a relative positional relationship between the vehicle and the preceding vehicle between before and after detecting the abnormality regarding the main control system by the detection control device.

**15.** Newly Added] The redundant system according to any one of claims 12 to 14, wherein
the operation control main control device:
includes a storage device that stores a past arithmetic operation result by the operation control main control device; and
estimates a position of the vehicle on a lane on which the vehicle travels based on the arithmetic operation result stored in the storage device when the detection control device detects the abnormality regarding the sensor.

**16.** Newly Added] The redundant system according to any one of claims 12 to 15, comprising
a change-over device that electrically makes or breaks conduction between the first power supply system and the second power supply system, and
the operation control sub control device controls the change-over device to break conduction between the first power supply system and the second power supply system when the detection control device detects abnormality in the first power supply system.

**17.** Newly Added] The redundant system according to any one of claims 11 to 16, comprising:
a steering control main control device that controls steering of the vehicle based on a target steering value input from the operation control main control device or the operation control sub control device; and
a steering control sub control device used instead of the steering control main control device when abnormality regarding the steering control main control device is detected, wherein
the steering control main control device is connected to the second power supply system and is not connected to the first power supply system, and
the steering control sub control device is connected to the first power supply system and is not connected to the second power supply system.

**18.** Newly Added] The redundant system according to any one of claims 11 to 17, comprising
a first monitor device that monitors a state of the first power supply system, wherein
when the first monitor device determines that electric power is supplied to the first power supply system, the operation control main control device starts the process to cause the vehicle to autonomously travel.

**19.** Newly Added] The redundant system according to claim 18, comprising
a second monitor device that monitors a state of the second power supply system, wherein
the operation control main control device performs the process to cause the vehicle to autonomously travel until the first monitor device determines that electric power is not supplied to the first power supply system and the second monitor device determines that electric power is not supplied to the second power supply system.

**20.** Newly Added] A redundant system mounted on a vehicle configured to autonomously travel, the redundant system at least including a first power supply system and a second power supply system different from the first power supply system, the redundant system comprising:
an operation control main control device that performs a process to cause the vehicle to autonomously travel; and
an operation control sub control device used instead of the operation control main control device when abnormality regarding the operation control main control device is detected
a steering control main control device that controls steering of the vehicle based on a target steering value input from the operation control main control device or the operation control sub control device; and
a steering control sub control device used instead of the steering control main control device when abnormality regarding the steering control main control device is detected, wherein
the operation control main control device and the steering control sub control device are connected to the first power supply system and are not connected to the second power supply system, and
the operation control sub control device and the steering control main control device are connected to the second power supply system and are not connected to the first power supply system.

Statement under Art. 19.1 PCT
International Application No.: PCT/JP2020/045205

International Filing Date: 04.12.2020

Applicant:
Name: NISSAN MOTOR CO., LTD.
Address: 2, Takara-cho, Kanagawa-ku, Yokohama-shi, Kanagawa 2210023 Japan

Agent:
Name: TOKOSHIE PATENT FIRM
Address: Nishishinjuku KN Bldg., 22-27, Nishishinjuku 7-chome, Shinjuku-ku, Tokyo 1600023 Japan
Agent's Registration No.: 110000486

Applicant's or Agent's File Reference: 19-01619

Dear Sir/Madam:

The applicant, who received the International Search Report relating to the above identified International Application transmitted on February 2, 2021, hereby files amendment under Article 19(1) as in the attached sheets.
The Applicant hereby would like to amend the scope of claims as follows. The Applicant has canceled claims 1-10 and added claims 11-20.
The Applicant has added a claim 11. The claim 11 corresponds to the claim in which the subject matter of claim 2 at the time of the international application is added to claim 1 at the time of the international application. The International Searching Authority has reported that the invention in claim 2 at the time of the international application is novel and involve an inventive step with respect to the document cited in the international search report.
The claims 12-19 corresponds to the claims 3-10 at the time of the international application.
The Applicant has added a claim 20. The claim 20 corresponds to the claim in which the subject matter of claim 8 at the time of the international application is added to claim 1 at the time of the international application. The International Searching Authority has reported that the invention in claim 8 at the time of the international application is novel and involve an inventive step with respect to the document cited in the international search report.

The Applicant also files as attached herewith a brief statement explaining the amendment and indicating any impact the amendment might have on the description or the drawings.

Very truly yours,
 /Tatsuya MARUO, Tokoshie patent Firm/
